# EUROPEAN PATENT APPLICATION

(11) **EP 2 327 602 A2**
(43) Date of publication of application: **01.06.2011**
(21) Application number: 10182476.1
(22) Date of filing: 29.09.2010
(51) Int. Cl.: B62B 3/02, B62B 3/18

(54) **A side panel for a roll cage and an improved roll cage**

(30) Priority: 03.03.2010 GB 1003535; 29.09.2009 GB 0917039
(71) Applicant: Melia, Mike, Fosters Green Skelmersdale Lancashire WN8 6UE (GB)
(72) Inventor: Melia, Mike, Fosters Green Skelmersdale Lancashire WN8 6UE (GB)

(57) **Abstract**

A side panel (20) for a roll cage comprising a body portion (22), and engagement means (24) for engaging with a base frame of the roll cage, wherein the engagement means is resiliently attached to the body portion by resilient attachment means, such that the engagement means is resiliently movable relative to the body portion.

## Description

The present invention relates to a side panel for a roll cage, including a roll cage based on a conventional base frame, and to an improved roll cage, which incorporates a side panel according to the invention and a novel base frame.

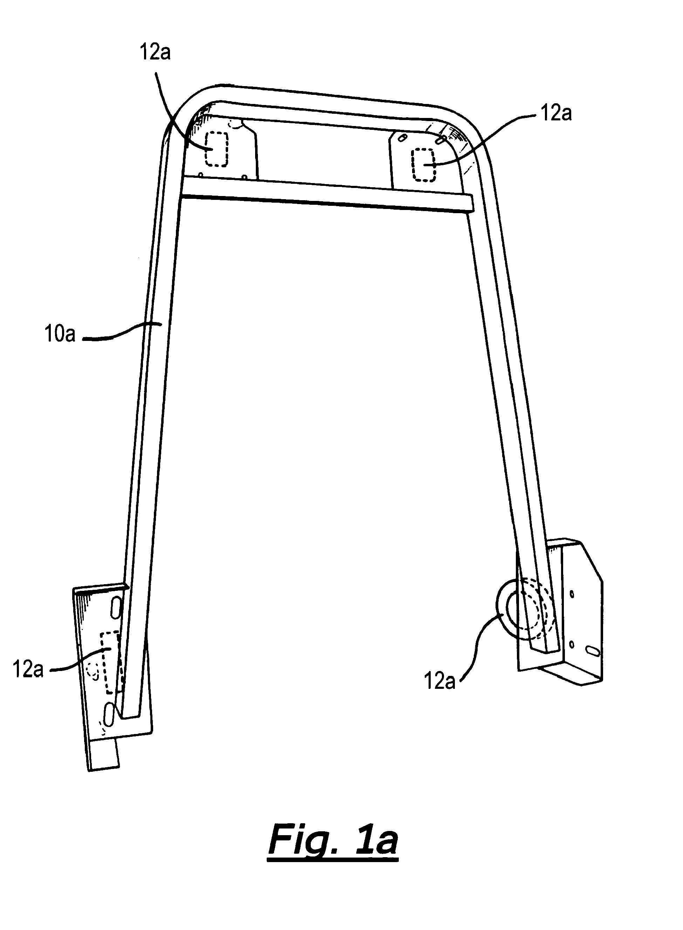

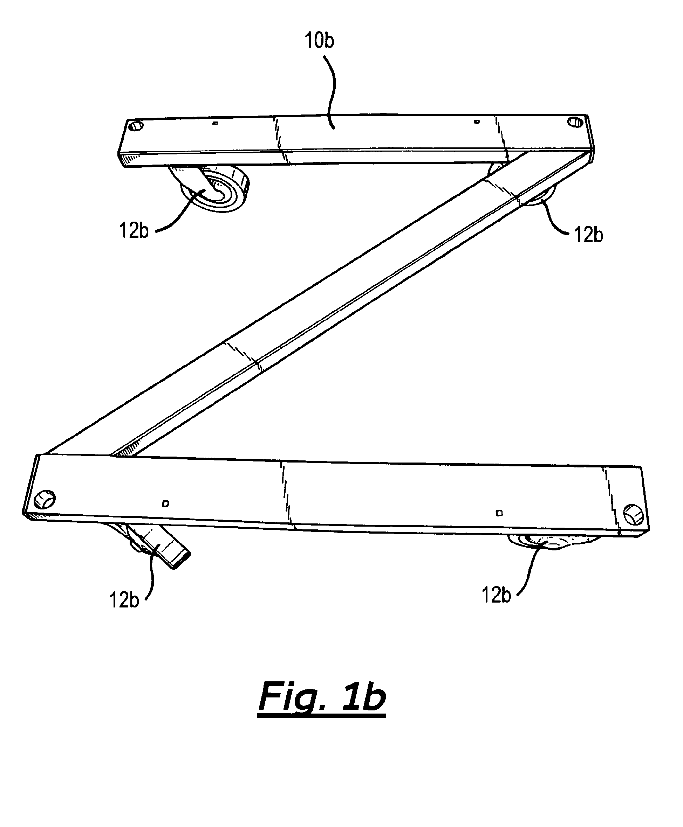

A roll cage, also known as for example a roll trolley, a roll container, a roll pallet or a distribution cage, is a piece of apparatus used for temporarily storing and transporting goods, e.g. crates of food, clothes, etc., from one place to another, e.g. in a warehouse or a supermarket. A roll cage is movable and is of a weight that allows it to be moved, often pushed or pulled, by a human being. Typically, a roll cage is made from a base frame onto which are mounted two, three or four side panels. A roll cage may also include tray panels, which are substantially horizontal panels, which act as shelves in the cage. The base frame may be of a design known in the art as an "A-frame" (as shown in Figure 1 a) or a "Z-frame" (as shown in Figure 1b). Figures 1a and 1 b show that base frame 10a, 10b is provided on its underside with a number or wheels or castors 12a, 12b, which allow movement of the corresponding roll cage.

Many roll cages are manufactured entirely from metal, i.e. the base frame, the wheels and the side panels are all metallic, in which case the base frame are the side panels are permanently attached to one another, e.g. they are welded together. However it is becoming increasingly common to provide the base frame in a plastics material, to reduce the overall weight of a roll cage, thereby making it easier to move around. Indeed it also known to make one or more of the side panels or tray panels from a plastics material, typically a moulded plastics material, e.g. a blow-moulded plastics material. This leads to a further weight reduction and provides a roll cage that is quieter to use and which reduces the occurrences of damage to the goods being stored and/or transported.

In making a roll cage where the parts are fittable together, as is the case with a plastics base frame and either metallic or plastics side panels, one problem that has been observed is the difficulty with which the parts do indeed fit together. The tight manufacturing tolerances of these parts typically leads to the result that the parts have to be fitted together using considerable force, e.g. the engagement means of a side panel are forcibly fitted into engagement with the corresponding engagement means of a base frame, which requires strength and which may lead to damage of one or both of the side panel and the base frame. Subsequently disengagement of these parts may also prove to be difficult and again may lead to damage of one or both of the side panel and the base frame.

It would therefore be desirable to provide a side panel, which is fittable to a base frame of either metal or plastic and which does not suffer the problems described above.

Accordingly, in a first aspect, the present invention provides a side panel for a roll cage comprising: a body portion, and engagement means for engaging with a base frame of the roll cage, wherein the engagement means is resiliently attached to the body portion by resilient attachment means, such that the engagement means is resiliently movable relative to the body portion.

Provision of resiliently attached engagement means as part of the body portion of a side panel in this manner introduce sufficient flexibility into the side panel to enable it to be easily engaged with, and fitted into, corresponding engagement means provided on the base frame. Typically the engagement means of the side panel will be in the form of two longitudinal legs, whilst the engagement means of the base frame will be in the form of correspondingly sized, shaped and located apertures. Whatever the configuration of the engagement means, their resilient attachment has the effect that they are able to move and be moved in the same plane as the body portion or out of the plane of the body portion of the side panel.

The resilient attachment means is preferably provided as a deformable web. Further preferably the deformable web is substantially U-shaped in cross-section, thereby being stretchable and compressible to provide the desired flexibility.

Advantageously, the resiliently attached engagement means may be an integral part of the body portion, meaning that both the body portion, the engagement means and the resilient attachment means may all be formed in a single step, e.g. by blow-moulding a single moulded piece. Such a moulded piece could indeed be made using any other suitable moulding technique within the scope and skill set of the skilled man. Alternatively however, the resilient attachment means may be a mechanical spring, which may be a coil spring. The engagement means may still be an integral part of the body portion, in which case the resilient attachments means would be located therebetween in a separate step.

The resiliently attached engagement means preferably extends in a downwardly divergent direction from the plane of the body portion to accommodate the resilient attachment means.

Advantageously a side panel according to the invention may be made from a plastics material. This material may be a high-density polyethylene or high-density polypropylene. However any other material having similar properties may be used.

To facilitate the manoeuvring of a roll cage incorporating one or more side panels according to the invention, a side panel may further comprise one or more handle portions. Each of these one or more handle portions may form an integral part of the side panel, and be moulded as such.

Preferably each one or more handle portion is flexible, meaning that each is able to deflect from a first position in which it lies in the plane of the side panel to a second position in which it is angled out of the plane of the side panel. Preferably the deflection may occur in one direction only. Flexibility is useful for helping to protect the hands of a person manoeuvring a roll cage incorporating one or more side panels, each having one or more handle portions, by flexing inwardly towards the interior space of the roll cage, thereby protecting the knuckles of the hands of the person pushing the roll cage from knocks and scrapes.

Further preferably each one or more handle portion is resiliently biased towards the first position, and may spring back from the second position into the first position, once the pushing force that has been applied to the roll cage is released. However when in the second position, each handle portion may also lock into position and require application of a pulling force to overcome the locking force and allow it to spring back to the first position.

An additional benefit conferred by such flexible handle portions follows from the resilient biasing of the one or more handle portions; when a pushing force is first applied to a roll cage incorporating one or more side panels according to the invention, the deflection of each handle portion from its first position to its second position may overcome the inertia of the roll cage, especially if the roll cage is heavily laden.

Further advantageously, the engagement means of the side panel may be provided with a reinforcing element, preferably in the form of a metal rod, for example a steel rod. Such a reinforcing element may form part of one or both of the longitudinal legs of a side panel. Each of the reinforcing elements may be of any desired length to provide the necessary degree of reinforcement to the side edges of a side panel according to the invention. For example, the reinforcing elements may extend from the bottom of a longitudinal leg up to a handle portion (if present) provided in the side panel.

The reinforcing elements may be moulded into a side panel during its manufacture, or they may be post-mould fitted into a side panel via appropriate openings in each of the legs in the panel.

To add to the functionality of the side panel, a radio-frequency identification (RFID) tag may be incorporated in it. An RFID tag would allow the goods within a roll cage fitted with at least one side panel according to the invention to be easily identified and tracked.

Whether a roll cage fitted with at least one side panel according to the invention is used to transport food or clothes, advantageously said side panel may be treated with an anti-bacterial and/or anti-microbial agent. The effect of such treatment may endure for a number of years and aid reduction in the transmission of bacteria, microbes and other such undesirables that can lead to human illness.

Roll cages are a common feature in places such as warehouses and supermarkets, and as such a large number of roll cages are already in existence, many having the disadvantages described earlier. Conveniently, therefore, a side panel according to the invention may be used with a roll cage in which the base frame is either a conventional A-frame or a conventional Z-frame.

Conventional A-frame and Z-frame bases of roll cages also have disadvantages however, as is more fully described in a co-pending patent application by the same applicant, which describes and claims a new and inventive base frame for a roll cage. A side panel according to the present invention may be used with a roll cage incorporating such a base frame, which itself comprises a main frame portion, and at least one movable frame portion which is movable between a position of use, in which it is lockable, and a position of non-use, for tidy stowage, each of the main frame portion and the at least one movable frame portion being provided with further engagement means for engaging with the side panel.

The at least one moveable frame portion is preferably locked into its use position as the side panel engages with both the main frame portion and the at least one movable frame portion. The use position is the position of the base frame when the roll cage is to be used for transporting and/or storing goods. Further preferably, the position of non-use, which is that adopted when the roll cage is to be tidily stowed away, is also lockable; the locking may again occur as the side panel engages with both the main frame portion and the at least one movable frame portion.

Accordingly, the invention provides in a second aspect a roll cage comprising: a base frame, which comprises a main frame portion, and at least one movable frame portion which is movable between a position of use, in which it is lockable, and a position of non-use, each of the main frame portion and the at least one movable frame portion being provided with first engagement means for engaging with the side panel, and a side panel, which comprises a body portion and second engagement means for engaging with the base frame, wherein the second engagement means is resiliently attached to the body portion by a resilient attachment means, such that the second engagement means is resiliently movable relative to the body portion and thereby readily engageable with the first engagement means of the base frame.

Preferably the at least one moveable frame portion is locked into its use position as the second engagement means of the side panel engages with the first engagement means of the base frame.

For a better understanding, the invention will now be more particularly described, by way of non-limiting example only, with reference to and as shown in the accompanying schematic drawings (not to scale) in which:
Figure 1 a is a plan view of a prior art A-frame base from of a conventional roll cage;
Figure 1 b is a plan view of a prior art Z-frame base from of a conventional roll cage;
Figure 2 is a front elevation of a side panel according to the invention;
Figure 3 is a detailed view of the bottom right corner of the side panel shown in Figure 2;
Figure 4 is a plan view from below of the side panel shown in Figure 2;
Figure 5 is a perspective view of a roll cage having a conventional base frame and two panels according to the invention;
Figure 6 is a perspective view of a first variation of the roll cage shown in Figure 5;
Figure 7 is a perspective view of a second variation of the roll cage shown in Figure 5;
Figure 8 is a perspective view of a third variation of the roll cage shown in Figure 5;
Figure 9 is a perspective view of a roll cage according to the invention;
Figure 10 is a perspective view of a first variation of the roll cage shown in Figure 9;
Figure 11 is a perspective view of a second variation of the roll cage shown in Figure 9;
Figure 12 is a perspective view of a third variation of the roll cage shown in Figure 9; and
Figure 13 is a perspective view of a fourth variation of the roll cage shown in Figure 9.

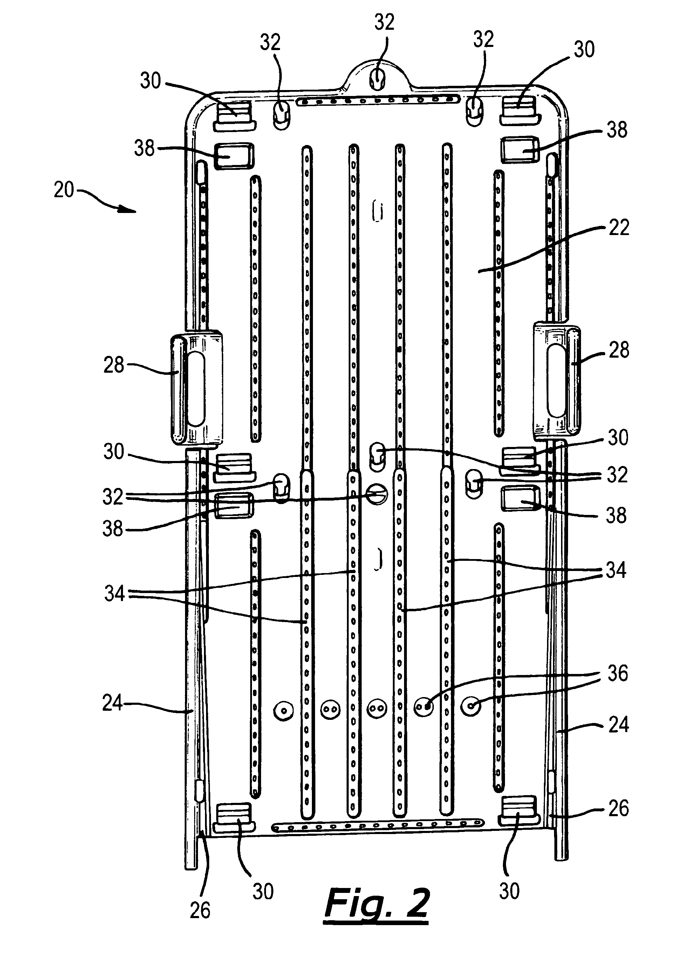

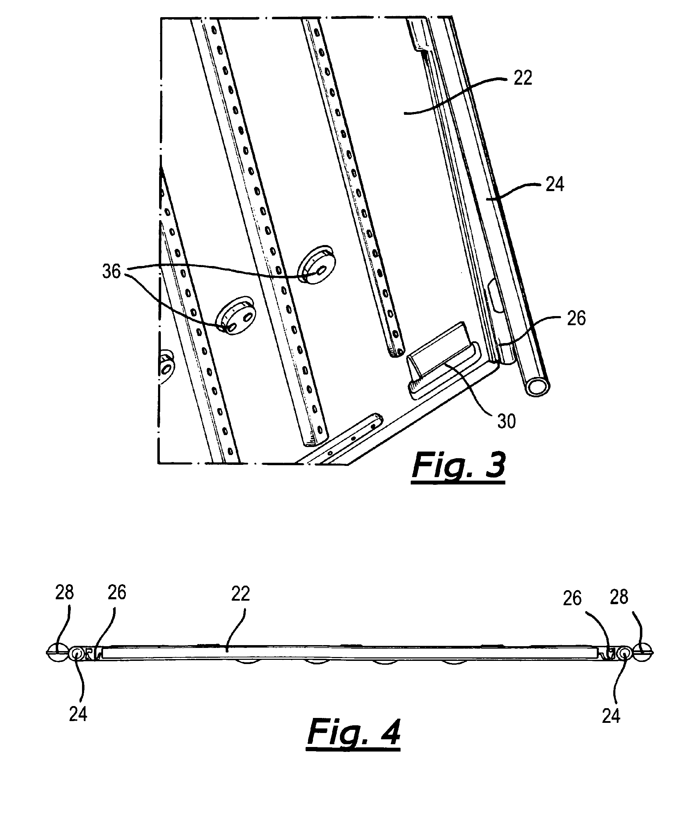

Figures 2, 3 and 4 show a side panel 20 for a roll cage comprising a body portion 22, engagement means, in the form of a pair of longitudinal legs 24 which extend in a downwardly divergent direction in the plane of body portion 22 and which are provided with reinforcing steel rods (not shown), and resilient attachment means, in the form of a deformable webs 26, which are accommodated between body portion 22 and legs 24. Each web 26 is substantially U-shaped in cross section, as is shown more clearly in Figures 3 and 4, meaning that each is stretchable, compressible and capable of withstanding torsional forces.

Side panel 20 further comprises two flexible handle portions 28, which may be used to push or pull a roll cage incorporating such a panel, six tray panel apertures 30, for accommodation of one or more tray panels (not shown), seven hanging rail apertures 32, for accommodation of hanging rails (not shown), four hanging rail recesses 34, into each of which a hanging rail (not shown) may be snap-fitted for storage, eight securing holes 36, through which an additional securing means, e.g. a rope (not shown), may be threaded to additionally secure the hanging rails (not shown) in place in recesses 34, and four tray panel recesses 38, for keeping said tray panels in folded away positions.

Side panel 20 is made by blow-moulding a high-density plastics material such as polyethylene, and as such legs 24 are an integral part of body portion 22. The reinforcing steel rods may be integrally moulded with the side panel or post-mould fitted into appropriate apertures (not shown) in each of the legs 24. Furthermore, webs 26 and handle portions 28 are formed in the same blow-moulding step and are thus also an integral part of body portion 22. Although the technique of blow-moulding is specifically referred to herein, it is to be understood that any other suitable moulding technique available to the skilled man may alternatively be used.

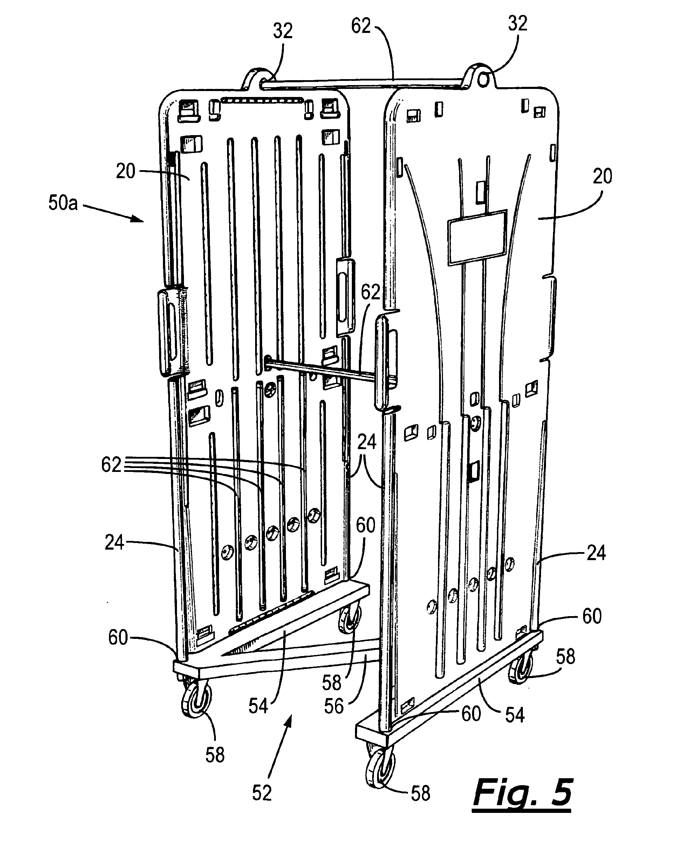

Figures 5 to 8 show a roll cage 50a, 50b, 50c, 50d comprising two side panels 20 according to the invention fitted into a conventional base frame, in the form of a Z-frame 52. Z-frame 52 is made from two parallel frame members 54, which are rigidly joined together by a diagonally orientated centre frame member 56. Both ends of frame members 54 are provided on their undersides with wheels or castors 58, such that there are four in total. Located in the region of each wheel or castor 58, frame members 54 are also provided with engagement means, in the form of apertures 60. Legs 24 of side panels 20 engage with, by fitting into, apertures 60 of Z-frame 52.

The roll cages shown in Figures 5 to 8 are slight variations of one another. In addition to the above, roll cage 50a of Figure 5 further comprises six hanging rails 62, two of which are shown located at different heights between mutually opposing hanging rail apertures 32 of side panels 20, with the remaining four being snap-fitted for storage into hanging rail recesses 34 of one side panel 20. Of course, the other side panel 20 could also be provided with a further four hanging rails in its hanging rail recesses. With this configuration it is envisaged that only goods that are provided on hangers, e.g. clothes (not shown), would be suitable for transportation/storage in roll cage 50a. Furthermore, the respective heights of hanging rails 62 would indicate use with half-body length garments or less, e.g. jackets, blouses, shirts, underwear, etc., or children's clothes would be appropriate.

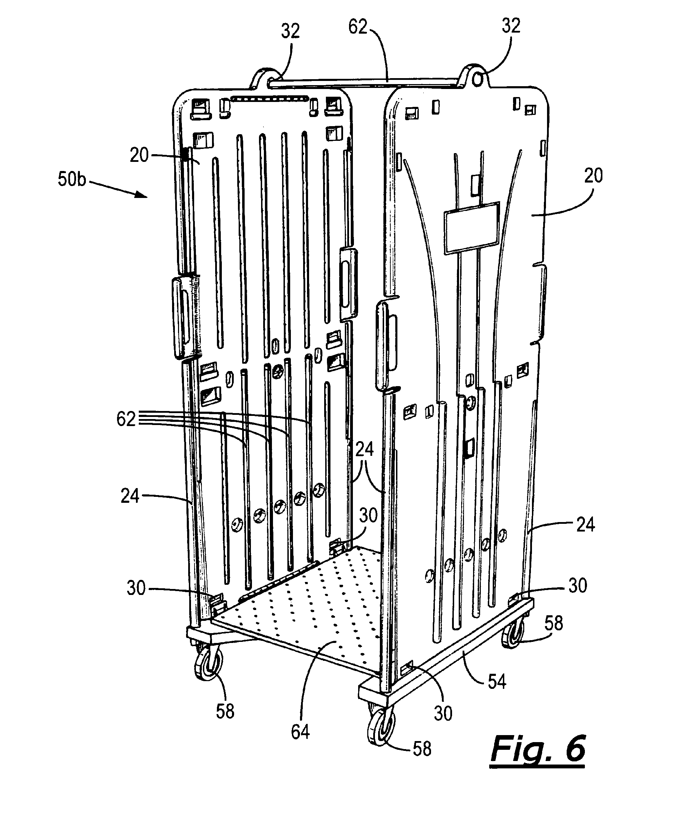

Roll cage 50b of Figure 6 further comprises five hanging rails 62, one of which is shown located between mutually opposing hanging rail apertures 32 of side panels 20, with the remaining four being snap-fitted for storage into hanging rail recesses 34 of one side panel 20, and a tray panel 64, which is located by engagement of its engagement means (not shown) with two pairs of mutually opposing tray panel apertures 30 in side panels 20. With this configuration it is envisaged that goods that are provided on hangers, e.g. clothes (not shown), and any other goods, would be suitable for transportation/storage in roll cage 50b by hanging on hanging rail 62 and placement on tray panel 64 respectively. Furthermore the height of hanging rail 62 would indicate use with full-body length garments or less, e.g. coats, dresses, etc., would be appropriate.

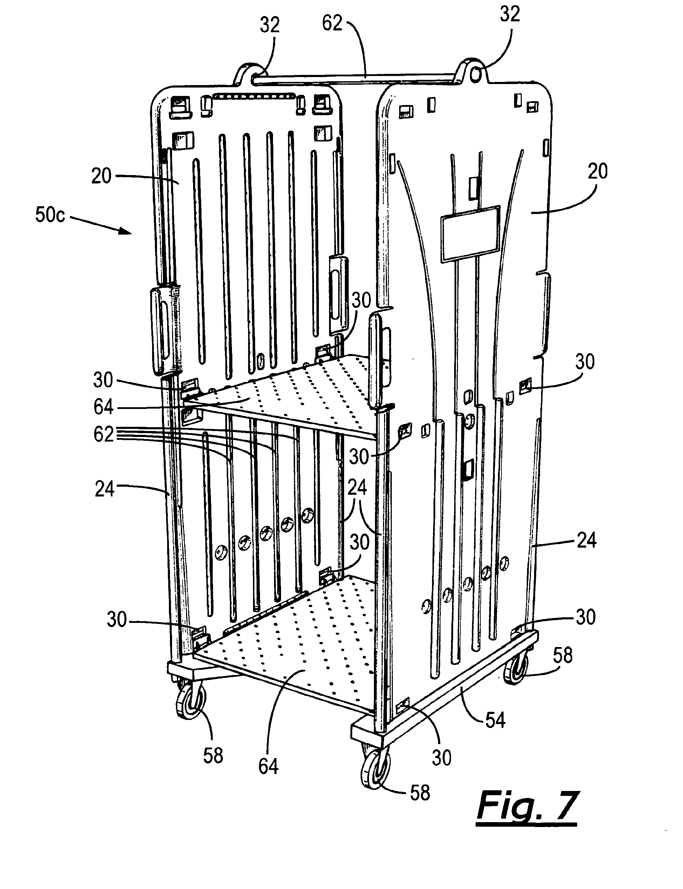

Roll cage 50c of Figure 7 is similar to that shown in Figure 6 except that it comprises an additional tray panel 64, which is again located by engagement of its engagement means (not shown) with two pairs of mutually opposing tray panel apertures 30 in side panels 20. With this configuration it is envisaged that goods that are provided on hangers, e.g. clothes (not shown), and any other goods, would be suitable for transportation/storage in roll cage 50b by hanging on hanging rail 62 and placement on tray panels 64 respectively.

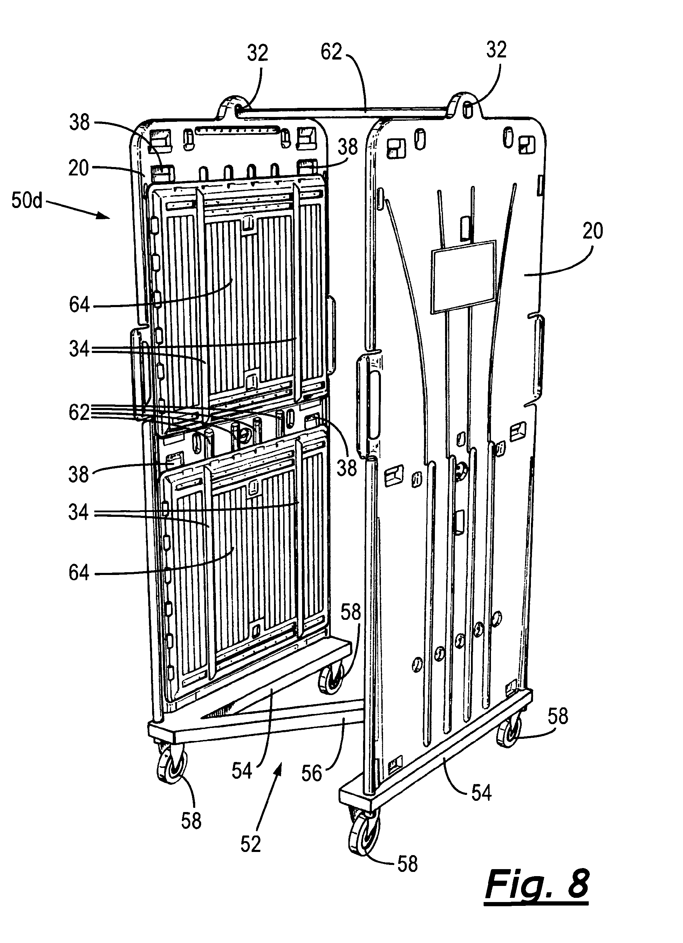

Roll cage 50d of Figure 8 is similar to that shown in Figure 7 except that tray panels 64 are now engaged with one side panel 20 only and are orientated substantially vertically so as to be parallel with said side panel 20. Tray panels 64 are located in their folded away positions and held in place by engagement of their engagement means with tray panel recesses 38. Figure 8 also shows that the underside of each tray panel 64 is provided with a further two hanging rail recesses 34, which when fitted with hanging rails (not shown) may provide additional structural strength to tray panels 64.

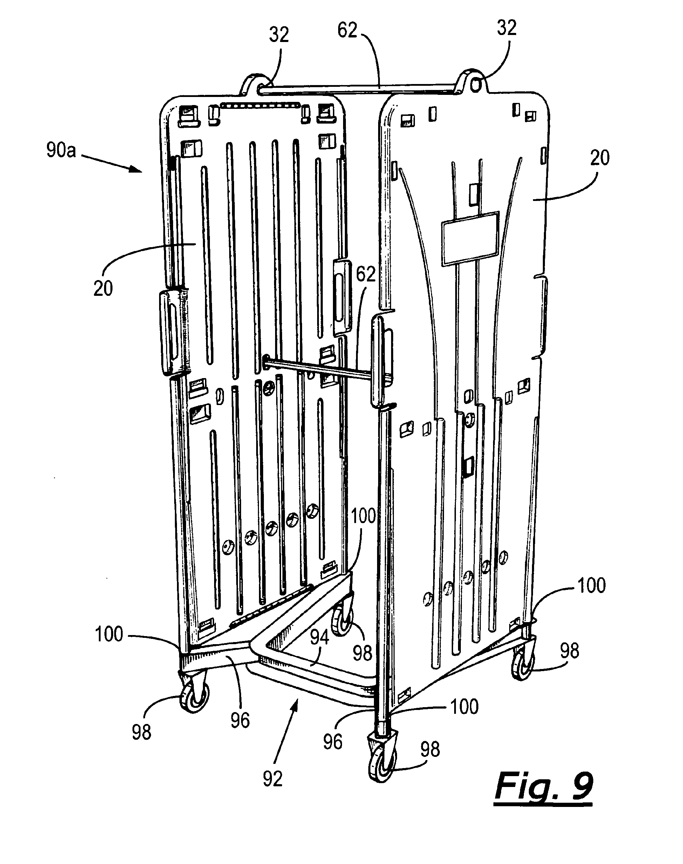

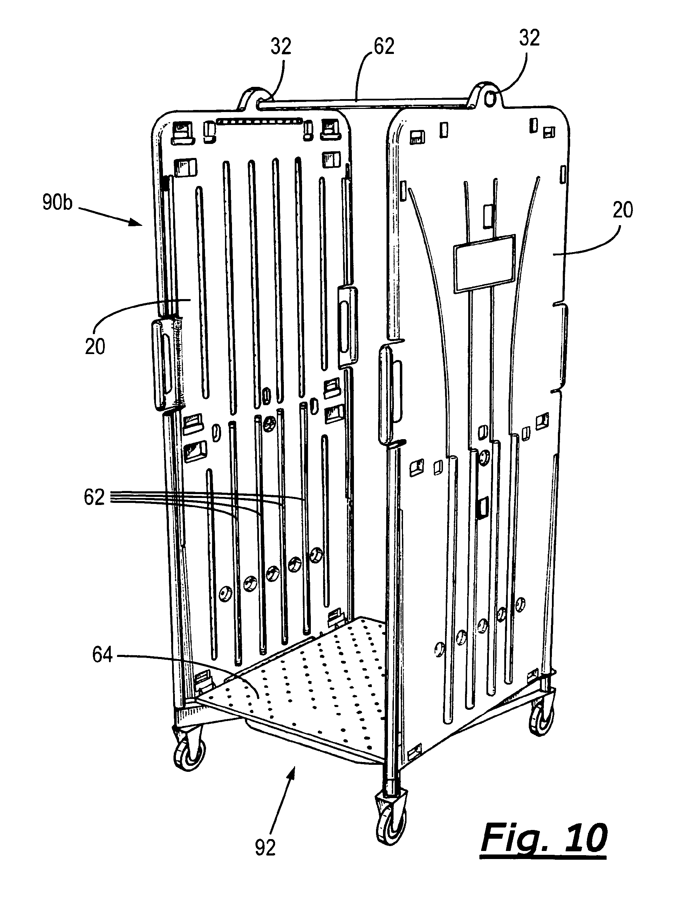

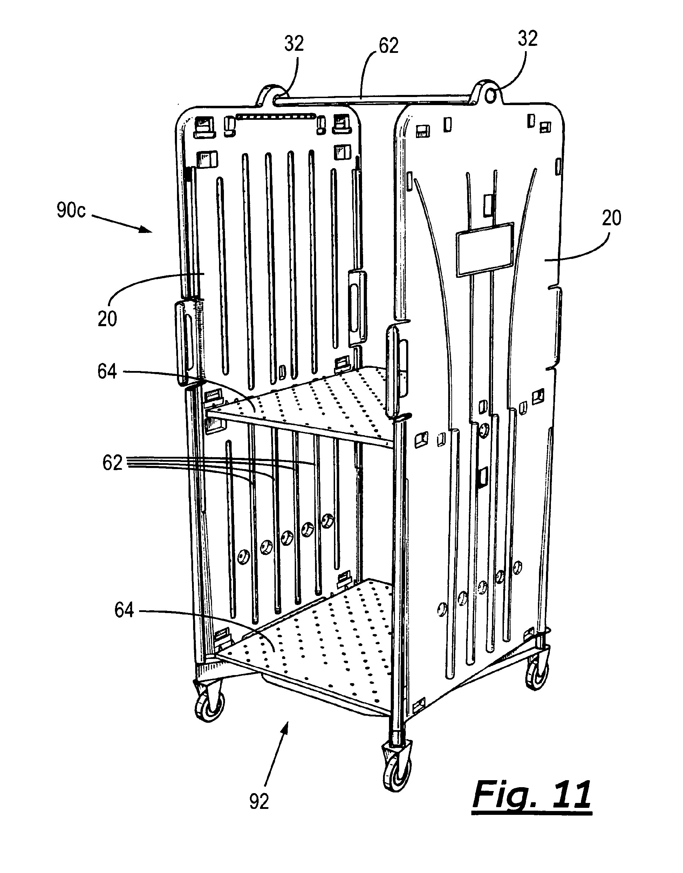

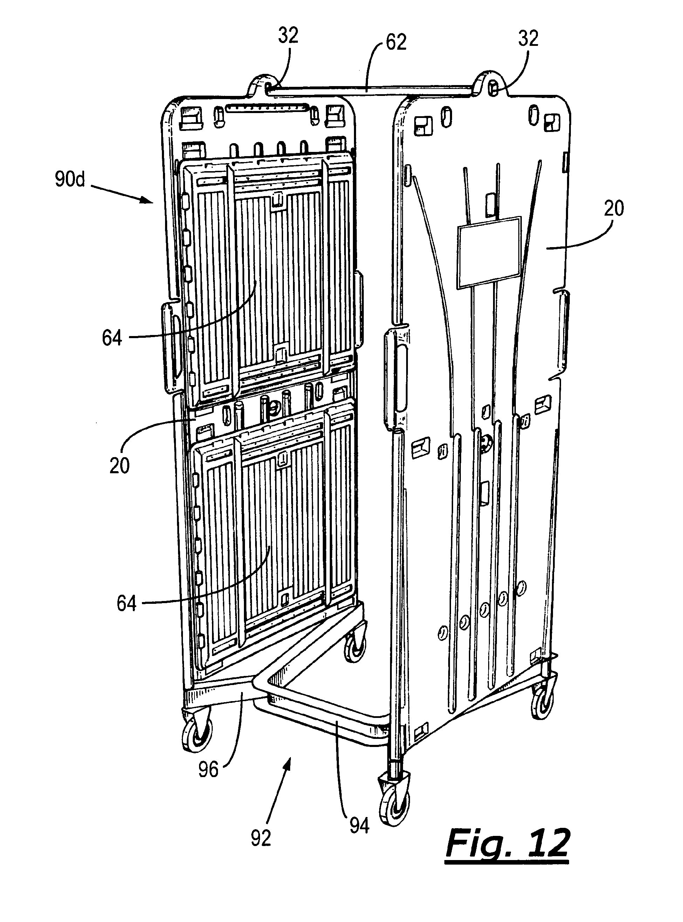

Figures 9 to 13 show a roll cage 90a, 90b, 90c, 90d, 90e comprising two side panels 20 according to the invention fitted into a novel and inventive base frame 92, which is made from a main frame portion 94 and two moveable frame portions 96, each of which is pivotally joined to main frame portion 94 at one of their ends. Each frame portion 96 is movable by pivoting in the same plane as main frame portion 94 to form the pseudo x-shape shown. The outer ends of frame portions 94, 96 are provided on their undersides with wheels or castors 98, such that there are four in total. Located in the region of each wheel or castor 98, frame portions 94, 96 are also provided with engagement means, in the form of apertures 100. Legs 24 of side panels 20 engage with, by fitting into, apertures 100 of frame 92. In doing so, moveable frame portions 96 are locked into position and further pivoting is prevented. Moveable frame portions 96 are unlocked by simply removing side panels 20 from engagement with apertures 100 in frame 92.

The roll cages shown in Figures 9 to 13 are slight variations of one another. In fact, the roll cages shown in Figures 9 to 12 correspond to those shown in Figures 5 to 8 respectively in terms of their additional components, and as such, like reference numerals have been used. However roll cages 90a, 90b, 90c, 90d are provided with base frame 92 rather than base frame 52. Figures 9 to 12 show roll cages 90a, 90b, 90c, 90d in a position of use, i.e. ready for transporting and/or storing goods.

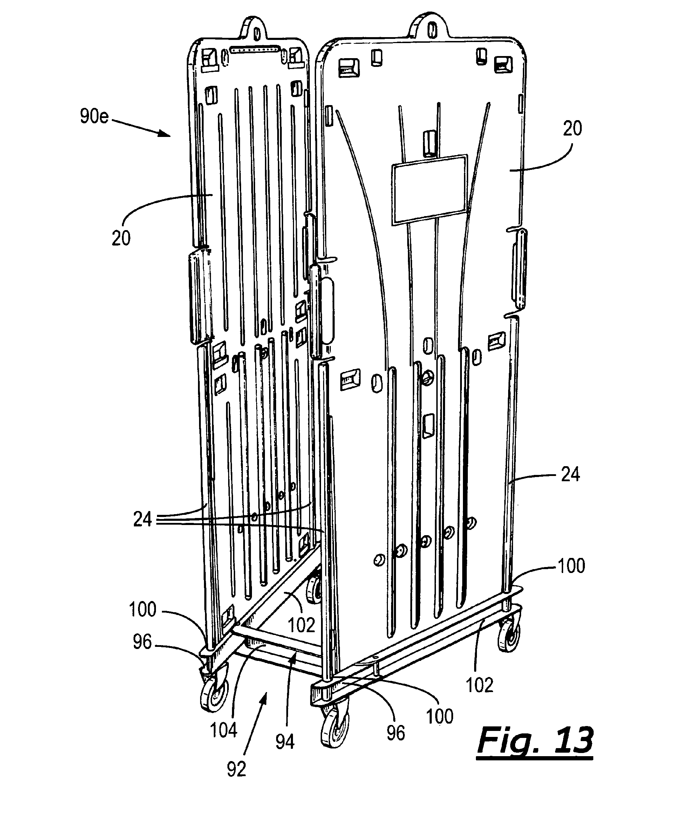

Figure 13 shows roll cage 90e in its stowage configuration, i.e. ready to be tidily stowed away. Roll cage 90e simply comprises two side panels 20 and base frame 92. Main frame portion 94 comprises two diverging arms 102 which are joined by a cross bar 104. Moveable frame portions 96 are aligned with diverging arms 102 to form the pseudo A-shape shown and are locked into position when legs 24 of side panels 20 engage with, by fitting into, apertures 100 of frame 92.

## Claims

1. A side panel for a roll cage comprising
a body portion, and
engagement means for engaging with a base frame of the roll cage, **characterized in that** the engagement means is resiliently attached to the body portion by resilient attachment means, such that the engagement means is resiliently movable relative to the body portion.

2. A side panel as claimed in claim 1 **characterized in that** the resilient attachment means is a deformable web, which is preferably substantially U-shaped in cross-section, the web thereby being stretchable and compressible.

3. A side panel as claimed in claim 1 or claim 2 **characterized in that** the resiliently attached engagement means is an integral part of the body portion.

4. A side panel as claimed in claim 1 **characterized in that** the resilient attachment means is a spring.

5. A side panel as claimed in claim 4 **characterized in that** the spring is a coil spring.

6. A side panel as claimed in any preceding claim **characterized in that** the resiliently attached engagement means extends in a downwardly divergent direction from the plane of the body portion to accommodate the resilient attachment means.

7. A side panel as claimed in any preceding claim made from a plastics material.

8. A side panel as claimed in claim 7 **characterized in that** the plastics material is high-density polyethylene or high-density polypropylene.

9. A side panel as claimed in any preceding claim further comprising a radio-frequency identification (RFID) tag.

10. A side panel as claimed in any preceding claim treated with an anti-bacterial and/or anti-microbial agent.

11. Use of a side panel as claimed in any preceding claim with a roll cage in which the base frame is either a conventional A-frame or a conventional Z-frame.

12. Use of a side panel as claimed in any of claims 1 to 10 with a roll cage in which the base frame comprises a main frame portion, and at least one movable frame portion which is movable between a position of use, in which it is lockable, and a position of non-use, each of the main frame portion and the at least one movable frame portion being provided with further engagement means for engaging with the side panel.

13. Use of a side panel as claimed in claim 12 **characterized in that** the at least one moveable frame portion is locked into its use position as the side panel engages with both the main frame portion and the at least one movable frame portion.

14. A roll cage comprising
a base frame, which comprises a main frame portion, and at least one movable frame portion which is movable between a position of use, in which it is lockable, and a position of non-use, each of the main frame portion and the at least one movable frame portion being provided with first engagement means for engaging with the side panel, and
a side panel, which comprises a body portion and second engagement means for engaging with the base frame, **characterized in that** the second engagement means is resiliently attached to the body portion by a resilient attachment means, such that the second engagement means is resiliently movable relative to the body portion and thereby readily engageable with the first engagement means of the base frame.

15. A roll cage as claimed in claim 14 **characterized in that** the at least one moveable frame portion is locked into its use position as the second engagement means of the side panel engages with the first engagement means of the base frame.
